# EUROPEAN PATENT APPLICATION

(11) **EP 1 676 690 A1**
(43) Date of publication of application: **05.07.2006**
(21) Application number: 04766966.8
(22) Date of filing: 30.09.2004
(51) Int. Cl.: B29C 49/28, B29C 51/10

(54) **METHOD, DEVICE AND MOULD WHICH ARE USED FOR THE HOT-MOULDING OF VARIABLE-CROSS-SECTION HOLLOW PARTS FROM A CONSTANT-CROSS-SECTION TUBE**

(30) Priority: 30.09.2003 ES 200302251
(71) Applicant: Ventura Berti, Miquel, 08461 Sant Esteve de Palautordera (ES)
(72) Inventor: Ventura Berti, Miquel, 08461 Sant Esteve de Palautordera (ES)
(74) Representative: Gislon, Gabriele
(86) International application number: PCT/ES2004/000428
(87) International publication number: WO 2005/030470

(57) **Abstract**

The apparatus comprises a mould (1) having a wall (2) defining a varying cross-section inner surface increasing from a smaller cross-section end (3) up to an opposite larger cross-section end (4). The mould is able to receive a constant cross-section thermoplastic tube (30) with projecting portions at both ends (3, 4), said smaller cross-section end (3) of the mould fitting on the tube (30). Said larger cross-section end (4) of the mould is closed by an end cap (5) having a central opening (6) fitting on the tube (30) while allowing it to slide. A chamber (8) is provided between the tube (30), the wall (2) and the end cap (5). Said chamber (8) can be communicated with a low-pressure source through a port (9) while air heating and hot-air blowing means (10) blow hot air into the tube (30).

## Description

### Scope of the invention

This invention relates to a method for hot moulding hollow variable cross-section parts from constant cross-section tube, whereby slim hollow parts can be obtained, with a variable cross-section and relatively long length, suitable, for example, as a protective external layer for the base of street lamps, flag poles, poster or signpost support posts, electrical wiring posts, etc., from sections of cylindrical tube obtained, for example, by extrusion.

### Background of the invention

As is well known by those skilled in the art, a post embedded at its base and intended to support at its top end an element that can be blown by the wind and/or by other agents, is subject to flexural and torsional stresses that are higher when the section of the post in question is nearer to the base. Therefore, a suitable post configuration has a variable cross section that provides a moment of inertia, which increases from the top end to the base connected to the ground. A configuration with a variable cross-section, which increases constantly, with one smaller cross-section end at the top and one larger cross-section end at the base, fulfils the above conditions. Nature provides an example of such a variable cross-section shape in the frustoconical form of the main trunk of many conifers. Also, there are examples of other suitable configurations, which include frustopyramidal, frustoconical channelled configurations, *inter alia.* In applications such as bases for lamp posts, flag poles, poster or signpost supports, etc., it is advisable that these posts are also as resistant as possible to the elements, and therefore reinforced cement or ceramic posts are usually used, covered with an external protective layer of plastic or thermoplastic material. Usually, the construction process for these posts includes first obtaining a plastic or thermoplastic hollow part with a variable cross-section, for example, frustoconical, the inside of which is subsequently used as a mould for the reinforced cement or ceramic material forming the post's resistant core.

The technique for obtaining a thermoplastic cylindrical tube by extrusion is well known and widely used, whereby high production rates are obtained at a low cost. However, an extrusion process cannot be used to obtain hollow, variable cross-section, thermoplastic parts, because said process only provides constant section configurations, and means other processes have to be used which implies using moulds. A known technique for obtaining moulds is to apply fibreglass reinforced polyester resin to a mould or core of any suitable material, which is subsequently removed.

Therefore, it would be advantageous to be able to use lengths of extruded, thermoplastic tube, which can be obtained at a low cost, as the partially conformed or "preformed" starting material and subsequently deform the lengths of tube against a mould to obtain hollow, variable cross-section parts.

There are well known techniques for obtaining hollow, thermoplastic objects by blowing a thermoplastic perform. These techniques consist in inserting the preform in a mould and then blowing hot air inside the preform so as to soften and deform the walls thereof until they apply to the internal surfaces of the mould. Patents EP-A-0567926, EP-A-0838322, EP-A-0868295 and WO-98/09795 describe some embodiments for shaping thermoplastic containers by blowing hot air. In these examples, the preform has a hollow interior with one single opening through which the hot air is blown, so that inside the perform relatively high pressure is produced that causes the walls thereof to deform against the mould. However, this technique cannot be used when a tube that is open at both ends is used as the preform because the hot air blown through one of the ends thereof comes out at the other end without causing an increase in pressure inside the tube that is capable of deforming the walls thereof.

Patent US-A-4950153 and patent applications US-A-2002/0105115 and US-A-2003/0021927 describe methods and/or apparatuses for moulding thermoplastic containers wherein blowing hot air inside the perform is combined with creating a relative low pressure in the mould cavity. However, neither is the problem raised here of a using a tube that is open at one end as the perform.

Patents US-A-6458311 and WO-02/081178 describe respectively a method and a device for manufacturing double walled, corrugated continual tube. In both cases, a plastic injection apparatus extrudes at the same time an inner tube and an outer tube inside a mould with corrugated internal walls, and an apparatus creates relative low pressure between the outer tube and the wall of the mould to deform the outer tube, which is still hot, against the corrugated wall of the mould. This method and device require an expensive, heavy machinery plant which means it is unfeasible to adapt it to obtaining, at a moderate cost, hollow, variable cross-section parts intended as support posts for posters, lighting, signposts, or flag poles, etc.,.

### Brief disclosure of the invention

The aim of this invention is to overcome the above drawbacks by providing a method, apparatus and mould for hot moulding hollow, variable cross-section parts from commercially available, constant section, thermoplastic tube, using a mould that can be manufactured at a relatively low cost and a combination of hot air blowing and suction.

This aim is achieved, according to a first aspect of this invention, by providing a method for hot moulding hollow, variable cross-section parts from constant cross-section tube, characterised in that it includes the following steps. The method includes first of all inserting a length of thermoplastic, constant cross-section tube into a mould having a wall defining a variable cross-section inner surface ending in a smaller cross-section end and a larger cross-section end. Said length of constant cross-section tube is longer than said wall defining said variable cross-section inner surface and it is arranged so that some portions of said constant cross-section tube project from both ends of the mould wall, the section of said smaller cross-section end being adapted to fit to an area of an outer surface of said constant cross-section tube next to one end thereof. The said fitting between the smaller cross-section end of the mould and the outer surface of the tube is closed sufficiently to ensure relative air tightness.

The following step includes placing an end cap adapted to close said larger cross-section end of the mould wall around the constant cross-section tube. For this purpose, said end cap is provided with a central opening for the tube to pass through, said central opening having a section adapted to fit to an area of said outer surface of the tube next to the other end thereof. At this larger cross-section end of the mould, the fitting is such that it ensures relative air tightness while also allowing the constant cross-section tube to slide through the opening in the cap.

Next the method includes activating air tight closure means to attach said end cap at the larger cross-section end of the wall, providing an air tight chamber between the outer surface of the constant cross-section tube, the variable cross-section inner surface of the wall and the end cap. Then said air tight chamber is made to communicate with a low pressure source through at least one port provided in the wall defining the variable cross-section inner surface, and, using air heating and hot air blowing means, hot air is blown into the constant cross-section tube through the portion thereof which projects through the smaller cross-section end of the wall while said low pressure source creates a relative vacuum in the air tight chamber.

The combination of softening the tube material, by heating it with hot air, and creating the relative vacuum in the mould cavity causes the constant section wall of the tube to deform and apply itself to the variable cross-section inner surface of the mould, thus acquiring the shape of said surface.

It is important to highlight that the increased section produced in the wall of the tube during the deformation is not produced at the expense of reducing the thickness of the tube wall, but rather at the expense of a tube portion that initially projects through the opening in the end cap which gradually penetrates the inside of the mould as said deformation takes place. In other words, the tube slides towards the inside of the mould through the opening in the end cap. Therefore, the wall of the larger section part of the hollow, variable cross-section part obtained maintains a thickness approximately equivalent to that of the wall of the initial tube, which provides larger resistance to the part obtained. Also, with the method of this invention, the tube material is heated and then cools progressively and gently by virtue of which the polymer looses the internal stresses normally produced when extruding the initial tube, and during the deformation the polymer chains are orientated making the material more resistant. Moreover, any impurity or small defect in the initial tube is unavoidably detected during the deformation process.

In some applications, the above-described method includes, after heating with the hot air, the additional steps of closing the end of the constant cross-section tube projecting from the larger cross-section end of the wall by means of a cap, then injecting, by means of an adaptor device connected to a compressed air source, compressed air into the constant cross-section tube, through the portion thereof projecting from the smaller cross-section end of the wall while the tube is still hot and said low pressure source creates the relative vacuum in the air tight chamber.

When the shaping operations have been completed, once the tube has been deformed to the variable cross-section shape and cooled sufficiently, it is stripped from the mould by removing the end cap and then at least some portions next to both ends of the tube that have not been deformed against the wall defining the variable cross-section inner surface, are cut and thrown away. With the method of this invention it suffices to use a tube made from a long chain thermoplastic polymer, such as polypropylene, polyethylene, PVC, PET, etc., with light stabilising fillers that are resistant to chemical agents and can withstand the elements, to provide a support post for signposts, posters, lighting, electrical wiring, flags, etc. The initial tube can have any cross section, for example, a circular, polygonal, channelled section, *inter alia,* with diameters ranging from 30 mm to 400 mm, and lengths up to 6 metres. The temperature of the hot air that is blown varies between 190°C and 360°C over a period of time ranging from 45 to 180 seconds, according to the tube material, and the diameter, length and thickness of the wall thereof, *inter alia.*

The variable cross-section hollow parts obtained can be used as a protective external layer in solid or semisolid, reinforced ceramics or cement bases.

### Brief description of the drawings

The above characteristics and others as well as the advantages will become more apparent from the following detailed description of an exemplary embodiment of the invention, with reference to the attached drawings, in which:
Fig. 1 is a partially sectioned, side elevation view of the apparatus for hot moulding hollow, variable cross-section parts from constant cross-section tube according to this invention;
Fig. 2 is a cross sectional view of the mould in Fig. 1;
Fig. 3 is a cross sectional view of the mould in Fig. 2 with a length of tube inserted in said mould before deformation;
Fig. 4 is a cross sectional view of the mould with the length of tube after the deformation;
Fig. 5 is a partially sectioned view illustrating the deformation of the tube at the larger cross-section end of the mould;
Fig. 6 is a cross sectional view of the mould; and
Fig. 7 is a side schematic view illustrating an embodiment variation for the air tight closure means of the end cap located at the larger cross-section end of the mould.

### Detailed description of some exemplary embodiments of the invention

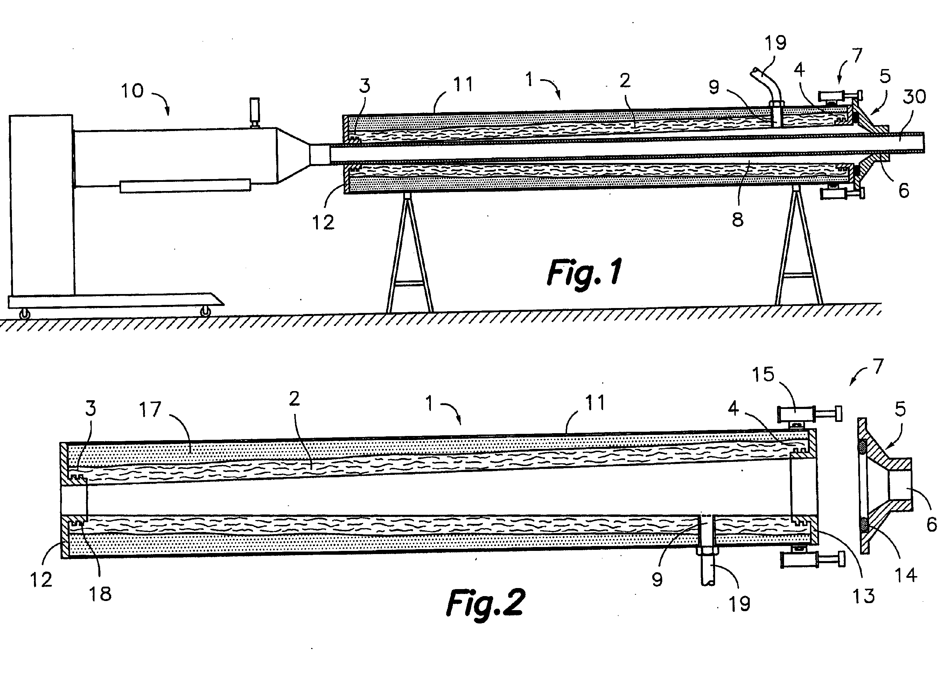

The apparatus and the corresponding mould according to this invention are described below with reference to Figs. 1 through to 7, while disclosing the implemented method by means of said drawings.

First of all with reference to Fig. 1, the apparatus for hot moulding hollow, variable cross-section parts from constant cross-section tube of this invention includes a mould 1, with one or more ports 9 that can be connected to a low pressure source (not shown) and air heating and hot air blowing means 10. Said heating and hot air blowing means 10 include, for example, electrical resistances and conventional fans, and therefore the detailed description thereof is omitted.

Mould 1, shown in greater detail in Fig. 2, includes a wall 2 defining a variable cross-section inner surface ending in one smaller diameter end 3 and a larger diameter end 4. In the illustrated exemplary embodiment, the cross sectional profile of the variable cross-section surface of mould 1, including the ends thereof 3, 4, is circular, which gives a generally frustoconical shape to the inner surface of the mould. However, other cross sectional profiles are also possible such as polygonal profiles and others, giving frustopyramidal and/or channelled configurations, *inter alia.*

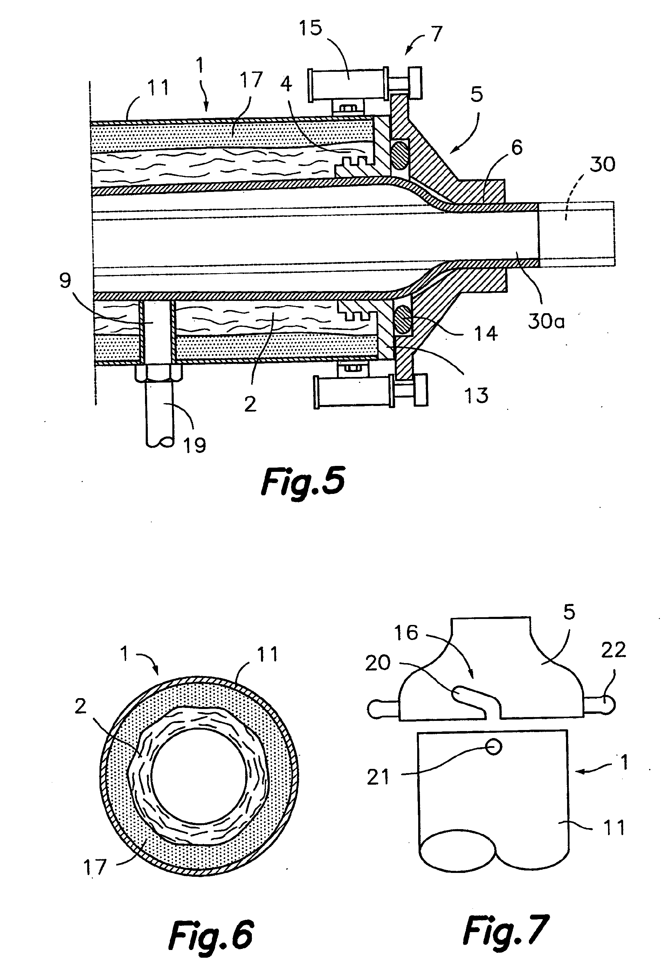

Wall 2 defining the frustoconical inner surface is made from a polymer or copolymer, such as polyester, reinforced with fibreglass, obtained by being deposited on a suitably configured core according to a well known technique. The mould includes a housing structure 11 surrounding the outside of wall 2 defining the frustoconical inner surface, and a pair of ring shaped end walls 12, 13, connecting the ends of said housing structure 11 to the ends of frustoconical inner surface 2. In order to ensure a solid join between said end walls 12, 13 and wall 2 of the mould, bushings 18 project from end walls 12, 13, having a rough or filleted outer wall to penetrate the material of wall 2, the inner wall of which is a continuation of frustoconical inner surface 2 of the mould. In the exemplary embodiment shows (see also Fig. 6), said housing structure 11 is a steel plate cylinder, and a space defined between housing structure 11, wall 2 defining the frustoconical inner surface and end walls 12, 13, is filled with a foam material 17, such as, for example, polyurethane foam. In wall 2 defining the frustoconical inner surface at least one port 9 is open connected to a duct 19 that can be connected to a low pressure source.

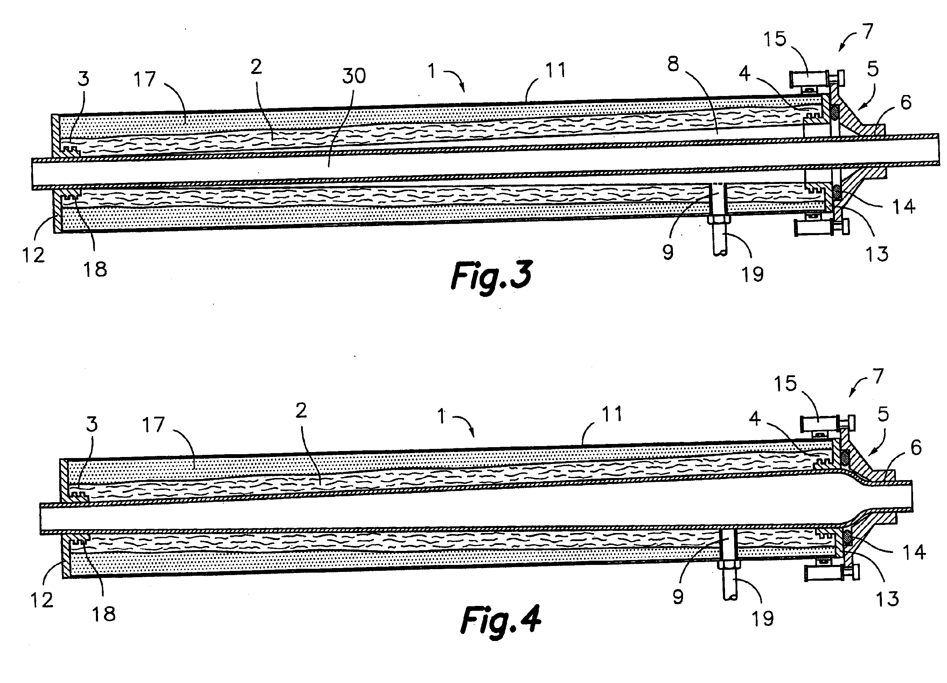

As best shown in Fig. 3, mould 1 can receive in the inside thereof a length of constant cross-section tube 30 made from thermoplastic material, which is longer than the length of said wall 2 defining said variable cross-section inner surface. Obviously, the section of tube 30 will depend on the section of wall 2 of the mould. In other words, in this example, where the inner surface of the mould is frustoconical, the section of tube 30 will be circular and its configuration cylindrical, although other sections and configurations are possible. Also, cylindrical tube 30 is placed inside mould 1 with some end portions projecting through both ends 3, 4 of mould 1. An essential feature is that the section of smaller section (or smaller diameter) end 3 is adapted to fit to an area of an outer surface of said constant section (or cylindrical) tube 30 next to one end thereof.

In order to close the larger section (or larger diameter) end 4 of wall 2 an end tap 5 is used having a central opening 6 with a section adapted to fit to an area of said outer surface of constant section (or cylindrical) tube 30 next to the other end thereof, allowing said cylindrical tube 30 to slide. This sliding possibility plays an important role in the method of the invention, as will be evident below. Also, although in the exemplary embodiment shown in the figures, the variation in size of the cross sectional profile is constant (giving a substantially straight generant), in the variable cross-section configuration of the mould, the variation in size of the cross sectional profile can change throughout the mould, so that the inner surface of the mould can be configured, for example, in the form of a drum, even with both ends having an equal section, in which case at least one of said ends, or preferably both ends, must allow cylindrical tube 30 to slide therethrough.

Mould 1 includes air tight closure means 7 for attaching said end cap 5 to larger diameter end 4 of wall 2 providing a sealed chamber 8 between the outer surface of cylindrical tube 30, the inner frustoconical surface of wall 2 and end cap 5, and said sealed chamber 8 can be associated with said low pressure source through port 9 and conduit 19.

When a length of tube 30 is placed inside mould 1 as shown in Fig. 3, the method of this invention includes using said air heating and hot air blowing means 10 (see Fig. 1), to blow hot air inside cylindrical tube 30 through the portion thereof projecting through smaller diameter end 3 of wall 2 while said low pressure source creates a relative vacuum in sealed chamber 8. The combination of softening the material of tube 30 by heating it with hot air and creating the relative vacuum inside sealed chamber 8 causes tube 30 to deform until it adapts to inner frustoconical wall 2 of mould 1, as shown in Fig. 4.

Now with reference to Fig. 5, this shows a cross sectional view of larger cross-section end 4 of mould 1, the deformed tube 30a being shown in a solid line and tube 30 before deforming being shown in a dotted line. It should be noted that deformed tube 30a has undergone an increase in its diameter without reducing the wall thickness. This is due to the fact that the outer end of tube 30 was able to slide gradually towards the inside of mould 1 through opening 6 in end cap 5 as tube 30a increased its diameter, thus providing a sufficient quantity of material to allow such deformation without reducing the thickness of the wall. If necessary, a certain amount of lubricating material can be provided, such as grease or talcum powder, on the outer end of tube 30 to facilitate the sliding movement thereof.

In certain cases, according to the dimensions of the part to be moulded and/or the tube material, the method includes, after blowing hot air, the additional steps of closing the end of cylindrical tube 30 projecting through larger diameter end 4 of wall 2 by means of a cap (not shown), and injecting compressed air into cylindrical tube 30 through the portion thereof projecting through smaller diameter end 3 of wall 2, while tube 30 is still hot and said low pressure source creates a relative vacuum in sealed chamber 8. Compressed air is injected using an adaptor device connected to a compressed air source (not shown). As a final operation, the method includes the additional steps of stripping tube 30 from mould 1 once it is deformed to the variable cross-section shape (for example, frustoconical), and cutting and removing at least some portions next to both ends of tube 30 that have not been deformed against wall 2 defining the variable cross-section (for example, frustoconical) inner surface.

As mentioned above, any constant cross-section tube 30 can be used, for example circular, polygonal and channelled, *inter alia,* and the tube material can be any long chain thermoplastic polymer, preferably with light stabilising additives that are resistant to chemical agents and can withstand the elements.

The apparatus shown in Fig. 1 includes control and adjusting means for adjusting the flow and temperature of the blown air, the level of the relative vacuum and its application times, and the typical dimensions and material of cylindrical tube 30 and the corresponding mould 1. If using compressed air injection, the conditions thereof can also be regulated and controlled using said control means.

Said air tight closure means 7 of end cap 5 include at least one elastic joint 14, typically made from elastomeric material, arranged between end cap 5 and a surface of end wall 13 connected to larger diameter end 4 of wall 2, as well as a device for pressing end cap 5 against said surface of end wall 13 compressing said elastic joint 14. In the exemplary embodiment shown in Figs. 1 through to 5, said device for pressing end cap 5 against the surface of end wall 13 includes one or more fluid dynamic cylinders 15 attached to housing structure 11 of mould 1, it being possible to connect the pistons thereof to end cap 5. Fig. 7 shows another exemplary embodiment of the device for pressing end cap 5 against the surface of end wall 13 including a manually activated bayonet type closure 16, where inclined grooves 20 opening towards one edge of end cap 5 cooperate with lugs 21 attached to the end of housing structure 11 of mould 1, and handles 22 attached to the end cap are used to turn said end cap.

The exemplary embodiments shown and described are purely illustrative and non-limiting, and someone skilled in the art will add variants and modifications without departing from the scope of this invention as defined in the attached claims.

## Claims

1. A process for hot-moulding hollow parts of varying cross-section from a tube having a constant cross-section; **characterised in that** it comprises the stages of:
introducing a tube length (30) having a constant cross-section and being made of a thermoplastic material into a mould (1) comprising a wall (2) defining an inner surface of varying cross-section ending at an end (3) having a smaller cross-section and an end (4) having a larger cross-section, said length of cross-sectionally constant tube (30) being longer than the length of said wall (2) defining the aforementioned inner surface of varying cross-section, portions of said cross-sectionally constant tube (30) projecting from both ends (3, 4) of the wall (2), wherein the cross-section of said cross-sectionally smaller end (3) is adapted to fit on a region of an outer surface of said cross-sectionally constant tube (30) close to an end thereof;
setting an end cap (5) adapted for closing said cross-sectionally larger end (4) of the wall (2), said end cap (5) being provided with a central opening (6) having a cross-section adapted for fitting on a region of said outer surface of the cross-sectionally constant tube (30) close to the other end thereof while allowing the cross-sectionally constant tube (30) to be slidingly moved;
securing the end cap (5) to the cross-sectionally larger end (4) of the wall (2) by means of tight closure means (7) to provide a sealed chamber (8) between the outer surface of the cross-sectionally constant tube (30), the inner surface of the cross-sectionally varying wall (2), and the end cap (5);
communicating said sealed chamber (8) with a low-pressure source through at least one port (9) provided in the cross-sectionally varying wall (2);
blowing by means of air heating and hot-air blowing means (10) hot air into the cross-sectionally constant tube (30) through the portion thereof projecting from the cross-sectionally smaller end (3) of the wall (2) while said low-pressure source creates a relative vacuum in the sealed chamber (8).

2. A process as per claim 1, **characterised in that** after the blowing of hot air the process comprises the additional steps of:
closing the end of the cross-sectionally constant tube (30) projecting from the cross-sectionally larger end (4) of the wall (2) by means of a plug;
injecting by means of an adapter device connected to a pressurised air source pressurised air into the cross-sectionally constant tube (30) through the portion thereof projecting from the cross-sectionally smaller end (3) of the wall (2) while the tube (30) remains in a hot state and said low-pressure source creates a relative vacuum in the sealed chamber (8).

3. A process as per claim 1 or 2, **characterised in that** the process comprises the additional steps of:
withdraw the tube (30) from the mould (1) after the tube (30) is deformed to the varying cross-section; and
cutting off and discarding at least portions close to both ends of the withdrawn tube (30), said portions being those that have not been deformed against the wall (2) defining the cross-sectionally varying inner surface.

4. A process as per claim 1, **characterised in that** the process comprises using a tube (30) whose constant cross-section is selected from a group including the circular, polygonal and fluted cross-sections, among others, and whose material is a long-chain thermoplastic polymer with light-stabilising additives and additives providing chemical and weather resistance.

5. An apparatus for hot-moulding hollow parts of varying cross-section from a tube having a constant cross-section, **characterised in that** the apparatus comprises:
a mould (1) with a wall (2) defining an inner surface of varying cross-section ending at an end (3) having a smaller cross-section and an end (4) having a larger cross-section, wherein said mould (1) is able to receive therein a length of tube (30) having a constant cross-section, said tube (30) being made of a thermoplastic material and having a length longer than the length of said wall (2) defining the aforementioned cross-sectionally varying inner surface, with portions of said cross-sectionally constant tube (30) projecting from both ends (3, 4) of the mould (1), and wherein the cross-section of said cross-sectionally smaller end (3) is adapted to fit on a region of an outer surface of said cross-sectionally constant tube (30) close to an end of said tube;
an end cap (5) adapted for closing said cross-sectionally larger end (4) of the mould (1), said end cap (5) being provided with a central opening (6) having a cross-section adapted for fitting on a region of said outer surface of the cross-sectionally constant tube (30) close to the other end thereof while allowing the cross-sectionally constant tube (30) to be slidingly moved;
tight closure means (7) for securing said end cap (5) to the cross-sectionally larger end (4) of the mould (1) thereby providing a sealed chamber (8) between the outer surface of the cross-sectionally constant tube (30), the inner surface of the wall (2) having a varying cross-section, and the end cap (5);
at least one port (9) provided in the wall (2) defining the cross-sectionally varying inner surface, said sealed chamber (8) being able to be communicated with a low-pressure source through said port (9); and
air heating and hot-air blowing means (10) adapted to blow hot air into the cross-sectionally constant tube (30) through the portion thereof projecting from the cross-sectionally smaller end (3) of the wall (2) while said low-pressure source creates a relative vacuum in the sealed chamber (8).

6. An apparatus as per claim 5, **characterised in that** the apparatus comprises a plug adapted to close the end of the cross-sectionally constant tube (30) which projects through the cross-sectionally larger end (4) of the wall (2), and an adapter device connected to a pressurised air source to inject pressurised air into the cross-sectionally constant tube (30) through the portion thereof projecting from the cross-sectionally smaller end (3) of the wall (2) while the tube (30) remains in a hot state and said low-pressure source creates a relative vacuum in the sealed chamber (8).

7. An apparatus as per claim 5, **characterised in that** the apparatus comprises adjusting and control means for adapting the blown air flow and temperature, the level of relative vacuum and their application times to the characteristics of the cross-sectionally constant tube (30) and mould (1).

8. A mould for hot-moulding hollow parts of varying cross-section from a tube having a constant cross-section, **characterised in that** said mould (1) comprises:
a wall (2) defining an inner surface of varying cross-section ending at an end (3) having a smaller cross-section and an end (4) having a larger cross-section, said wall being able to receive therein a tube length (30) having a constant cross-section, said tube (30) being made of a thermoplastic material and having a length longer than the length of said wall (2) defining the aforementioned cross-sectionally varying inner surface, with portions of said cross-sectionally constant tube (30) projecting from both ends (3, 4) of the wall (2), wherein the cross-section of said cross-sectionally smaller end (3) is adapted for fitting on a region of an outer surface of said cross-sectionally constant tube (30) close to an end thereof, and wherein the cross-sectionally constant tube (30) is able to receive therein through its portion projecting from the cross-sectionally smaller end (3) of the wall (2) hot air being blown by air heating and hot-air blowing means (10);
an end cap (5) adapted for closing said cross-sectionally larger end (4) of the wall (2), said end cap (5) being provided with a central opening (6) having a cross-section adapted for fitting on a region of said outer surface of the cross-sectionally constant tube (30) close to the other end thereof while allowing the cross-sectionally constant tube (30) to be slidingly moved;
tight closure means (7) for securing said end cap (5) to the cross-sectionally larger end (4) of the wall (2) thereby providing a sealed chamber (8) between the outer surface of the cross-sectionally constant tube (30), the inner surface of the cross-sectionally varying wall (2), and the end cap (5); and
at least one port (9) provided in the wall (2) defining the cross-sectionally varying inner surface, said sealed chamber (8) being able to be communicated with a low-pressure source through said port (9).

9. A mould as per claim 8, **characterised in that** the mould comprises an enveloping structure (11) externally surrounding the wall (2) defining the cross-sectionally varying inner surface, and a pair of end walls (12, 13) connecting the ends of said enveloping structure (11) with the ends of the wall (2) defining the cross-sectionally varying inner surface.

10. A mould as per claim 9, **characterised in that** a space delimited by the enveloping structure (11), the wall (2) defining the cross-sectionally varying inner surface and said end walls (12, 13) is filled with a foam material (17).

11. A mould as per claim 10, **characterised in that** said foam material (17) is polyurethane foam.

12. A mould as per claim 9, **characterised in that** said enveloping structure (11) is a steel plate cylinder.

13. A mould as per claim 8, **characterised in that** said wall (2) defining the cross-sectionally varying inner surface is of a fibre-reinforced polymer or copolymer.

14. A mould as per claim 13, **characterised in that** said polymer is polyester and said fibres are glass fibres.

15. A mould as per claim 9, **characterised in that** said tight closure means (7) comprise at least a resilient gasket (14) between the end cap (5) and a surface of the end wall (13) being connected to the cross-sectionally larger end (4) of the wall (2), and a device for pressing the end cap (5) against said surface of the end wall (13) thereby compressing said resilient gasket (14).

16. A mould as per claim 15, **characterised in that** said device for pressing the end cap (5) against the surface of the end wall (13) comprises one or more fluid-operated cylinders (15).

17. A mould as per claim 15, **characterised in that** said device for pressing the end cap (5) against the surface of the end wall (13) comprises a bayonet lock (16).

18. A mould as per claim 8, **characterised in that** said cross-sectionally varying inner surface defined by said wall (2) has a configuration selected from a group including the frustoconical, the straight fluted frustoconical, the helically fluted frustoconical, the frustopyramidical, the straight fluted frustopyramidical, and the helically fluted frustopyramidical shapes, among others.

19. A mould as per claim 8, **characterised in that** the cross-sections of the cross-sectionally smaller end (3) of the wall (2) and the opening (6) of the cap (5), as well as the characteristics of the wall (2), are adapted for using a tube (30) whose constant cross-section is selected from a group including the circular, polygonal and fluted cross-sections, among others, and whose material is a long-chain thermoplastic polymer with light-stabilising additives and additives providing chemical and weather resistance.
